(19) Europäisches Patentamt
European Patent Office
Office européen des brevets

(11) EP 4 796 959 A2

(12) EUROPEAN PATENT APPLICATION

(43) Date of publication:
**26.08.2026 Bulletin 2026/35**

(21) Application number: **26191057.4**

(22) Date of filing: **27.09.2019**

(51) International Patent Classification (IPC):
***G01V 5/00*** *(2024.01)*

(52) Cooperative Patent Classification (CPC):
**G01V 5/224**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2018 GB 201816243**

(62) Document number(s) of the earlier application(s) in accordance with Art. 76 EPC:
**19795301.1 / 3 861 380**

(71) Applicant: **Smiths Detection France S.A.S.**
**94400 Vitry-sur-Seine (FR)**

(72) Inventors:
- **MAITREJEAN, Serge**
  **75020 Paris (FR)**
- **PERROT, Yann**
  **94400 Vitry-sur-Seine (FR)**

(74) Representative: **Mathys & Squire**
**32 London Bridge Street**
**The Shard**
**London SE1 9SG (GB)**

Remarks:
This application was filed on 09.07.2026 as a divisional application to the application mentioned under INID code 62.

# (54) INSPECTION OF CARGO

(57) In an example it is described a method (100) for inspecting a cargo (11), the cargo comprising a first object (111) made of a first material and a second object (112) made of a second material, the method comprising:
obtaining (S1) image data associated with an inspection image of the cargo, for at least two levels (HE, LE) of radiation energy;
obtaining (S2) equivalence data associated with mass equivalence of at least one of the first material and the second material with respect to a reference material, for the at least two levels of radiation energy;
obtaining (S3) observation data based on the image data and the equivalence data, comprising applying the obtained mass equivalence data to the image data by determining, pixel by pixel of the inspection image of the cargo, based on the obtained mass equivalence data and the image data:
a mass equivalence MEQHE of the inspection image of the cargo, at a higher level of radiation energy HE of the at least two levels of radiation energy, and
a mass equivalence $MEQ_{LE}$ of the inspection image of the cargo, at a lower level of radiation energy LE of the at least two levels of radiation energy; and

determining Icorr representative of a difference between the mass equivalence $MEQ_{HE}$ of the inspection image at the higher level of radiation energy and the mass equivalence $MEQ_{LE}$ at the lower level of radiation energy, such that:

$$Icorr = MEQ_{HE} - MEQ_{LE}$$

wherein one of the first material or the second material is the reference material.

Fig. 1

100
Obtaining image data
S1
Obtaining equivalence data
S2
Obtaining observation data
S3
Determining material
S4

EP 4 796 959 A2

## Description

### Field of Invention

The disclosure relates but is not limited to a method for inspecting cargo with X-rays. The disclosure also relates but is not limited to a corresponding inspection system or apparatus and a corresponding computer product or a computer program.

### Background

Cargo inspection may use High Energy Material Discrimination (HEMD) to extract information about atomic composition of the cargo. HEMD is based on interpretation of pair creation effect and Compton scatter. The pair creation effect and the Compton scatter are indeed both material dependent (due to the effective number Z of the material and the atomic mass number) and energy dependent. Cargo inspection at two distinct energies (e.g. High Energy - HE and Low Energy - LE) may thus enable to identify cargo materials.
However material identification may be difficult for either low or large thicknesses of materials in the cargo, or when the cargo comprises objects which overlap each other.

### Summary of Invention

Aspects and embodiments of the invention are set out in the appended claims. These and other aspects and embodiments of the invention are also described herein.

### Brief Description of Drawings

Embodiments of the present disclosure will now be described, by way of example, with reference to the accompanying drawings, in which:

Figure 1 shows a flow chart illustrating an example method according to the disclosure;
Figure 2 schematically illustrates an example system configured to implement, at least partly, example methods of the disclosure;
Figure 3 shows a flow chart illustrating an example method according to the disclosure;
Figure 4A shows graphs illustrating example differences (for three materials namely iron, aluminium and poly(methyl methacrylate) (PMMA) of the brand Plexiglas) between steel mass equivalence at high energy and steel mass equivalence at low energy, as a function of steel mass equivalence at high energy;
Figure 4B shows graphs illustrating example differences (for several materials) between steel mass equivalence at high energy and steel mass equivalence at low energy, as a function of an average of steel mass equivalence $(MEQ_{HE} + MEQ_{LE})/2$;
Figure 5A shows an example of steel mass equivalence image of a container at high energy ($MEQ_{HE}$);
Figure 5B shows an example of steel mass equivalence image Icorr, such that ($MEQ_{HE}$ - $MEQ_{LE}$);
Figure 6A shows a flow chart illustrating an example method according to the disclosure;
Figure 6B schematically illustrates a principle of material subtraction using MEQ graphs of Figure 4A, where a material of Object 2 is approximated by subtracting, in two dimensions, 15g/cm$^2$ of steel to an overlap of 30g/cm$^2$ of PMMA of the brand Plexiglas plus 15g/cm$^2$ of steel;
Figure 7A schematically illustrates an example of steel mass equivalence image, such that ($MEQ_{HE}$ - $MEQ_{LE}$); and
Figure 7B shows an example of steel mass equivalence image, such that $(MEQ_{HE} + MEQ_{LE})/2$.

In the figures, similar elements bear identical reference numbers.

### Specific Description of Example Embodiments

<u>Overview</u>

Embodiments of the disclosure provide a method for determining a material in a cargo. Mass equivalence of at least some of the materials in the cargo may be obtained. The obtained mass equivalence of the materials may be expressed with respect to a reference material, and depends on radiation energy. By obtaining the mass equivalence for at least two levels of radiation energy, at least some of the materials in the cargo may be obtained.
In some examples, the obtained mass equivalence may be represented using at least one parameter associated

with a difference between the mass equivalence at a higher radiation energy level and the mass equivalence at a lower radiation energy level. In some examples, the parameter may be represented as a function of the mass equivalence at the higher radiation energy level and/or as a function of an average of the mass equivalence at the higher radiation energy level and the mass equivalence at the lower radiation energy level. The representation of the parameter may enable simple approximation of materials in the cargo.

Alternatively or additionally, in some examples, at least one of the materials of the cargo may be used as a reference material for the mass equivalence, and observation data may be represented using a difference between the mass equivalence at a higher radiation energy level and the mass equivalence at a lower radiation energy level.

Embodiments of the disclosure may enable material identification even for low and/or large thicknesses of materials in the cargo, and even when the cargo comprises objects which overlap each other.

## Details Description of Example Embodiments

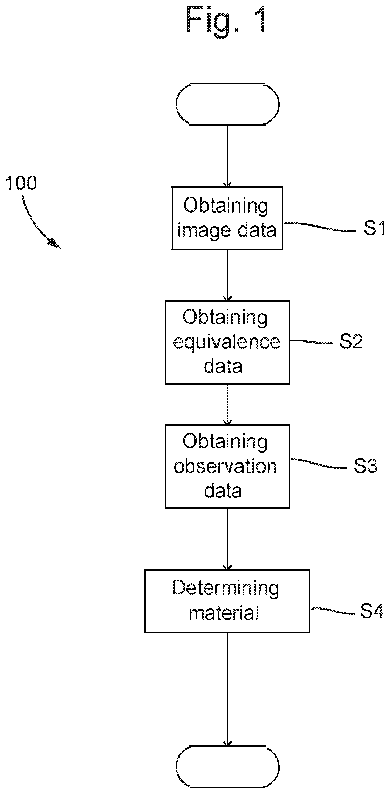

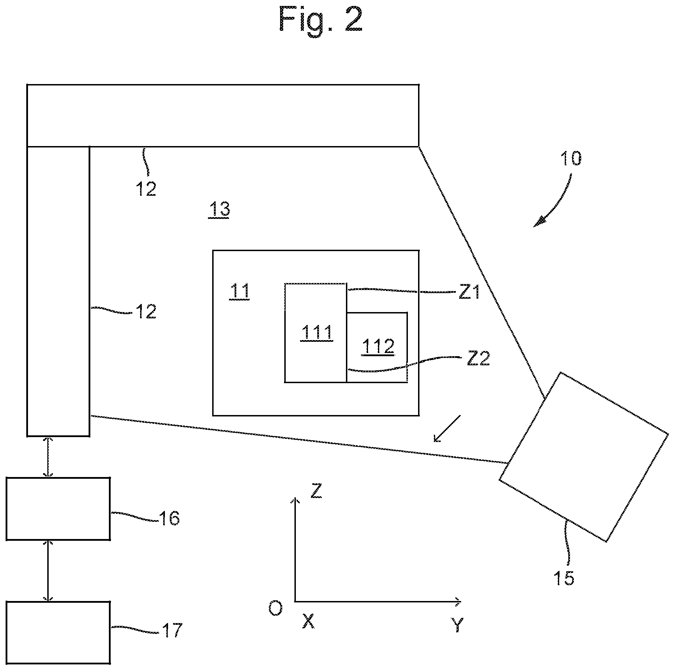

Figure 1 shows a flow chart illustrating an example method 100 for determining a material in a cargo 11, according to the disclosure. The method 100 is illustrated in Figure 1 in connection with Figure 2, which shows an inspection system 10 for inspection of the cargo 11 with radiation 13 comprising X-rays. The system 10 may be used to perform, at least partly, the method 100 and other methods of the disclosure. In the example illustrated in Figure 2, the system 10 comprises, amongst other conventional electrical elements, a radiation detector array 12, such as an X-ray detector array comprising detectors configured to generate, at least partly, an inspection image of the cargo 11. The cargo 11 may comprise a first object 111 made of a first material and a second object 112 made of a second material.

The method of Figure 1 mainly comprises:

obtaining, at S1, image data associated with an inspection image of the cargo 11, for at least two levels of radiation energy (e.g. 6MeV and 4 MeV, as non-limiting examples);
obtaining, at S2, equivalence data associated with mass equivalence of at least one of the first material and the second material with respect to a reference material, for the at least two levels of radiation energy;
obtaining, at S3, observation data based on the image data and the equivalence data; and
determining, at S4, at least one of the first material and the second material, based on the obtained observation data.

It should be understood that the mass equivalence of any given material (such as the first material and/or the second material, as non-limiting examples), with respect to the reference material corresponds to a thickness of an object made of the reference material, associated with a same radiation transmission, in the inspection image, as a radiation transmission associated with a thickness of an object made of the given material. For an object made of a material other than the reference material, the mass equivalence with respect to the reference material depends on radiation energy. The mass equivalence is expressed in $g.cm^{-2}$.

In some examples, the reference material may be metallic. In such examples, the mass equivalence MEQ to the reference material may be associated with metallic MEQ, such as iron MEQ, steel MEQ, lead MEQ or aluminium MEQ. In some examples, the reference material may be organic. In such examples, the mass equivalence MEQ to the reference material may be associated with organic MEQ, such as poly(methyl methacrylate) MEQ.

The radiation 13 may be generated by an X-ray source 15, which may be, in some examples, rigidly connected to the array 12. The source 15 may be moved with the array 12.

In the example illustrated in Figure 2, the inspection system 10 may be mobile and may be transported from a location to another location (the system 10 may comprise an automotive vehicle). Alternatively or additionally, the inspection system may be static with respect to the ground and cannot be displaced.

As explained in further detail below in relation to Figure 2, the inspection system 10 is configured to inspect the cargo 11. In some non-limiting examples, the inspection may be performed by transmission of inspection radiation 13 from the inspection radiation source 15 to the array 12 through the cargo 11.

In the example illustrated by Figure 2, the system 10 may further comprise a controller 16, configured to communicate, via a communication network which may be wired and/or may be wireless, with the array 12 to generate, at least partly, one or more images from data received from the array 12. The controller 16 comprises at least a processor and a memory in order to perform, at least partly, example methods according to the disclosure, e.g. locally on the system 10.

In the example illustrated by Figure 2, the system 10 may further comprise an analyser 17 configured to receive one or more images from the controller 16, for example over a communication network which may be wired and/or may be wireless. The analyser 17 comprises at least a processor and a memory in order to perform, at least partly, example methods according to the disclosure, e.g. remotely from the system 10.

In some examples, obtaining, at S1, the image data may comprise obtaining data associated with the inspection image of the cargo 11 from the detectors and/or from the controller 16 and/or from the analyser 17.

In some examples, obtaining, at S2, the equivalence data may comprise at least one of receiving the equivalence

data from a calibration step and determining the equivalence data during a calibration step.

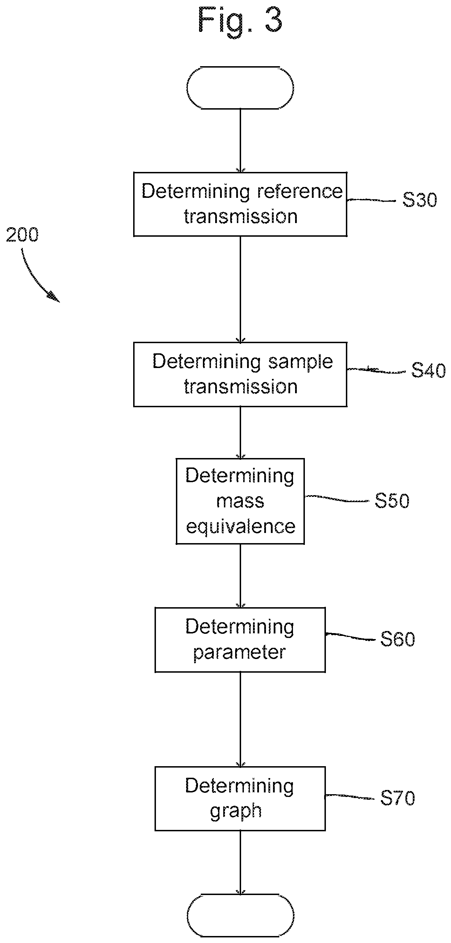

In some examples, and as illustrated in Figure 3, determining, at method 200, the equivalence data may comprise:

determining, at S30 in a reference calibration sub-step, radiation transmission through a plurality of thicknesses of a reference object made of the reference material, for the at least two levels of radiation energy, detector by detector of an array of detectors configured to generate, at least partly, the inspection image of the cargo; and

determining, at S40 in at least one sample calibration sub-step, a radiation transmission through a plurality of thicknesses of at least one sample object made of a material other than the reference material, for the at least two levels of radiation energy, detector by detector of the array of detectors configured to generate, at least partly, the inspection image of the cargo; and

determining, at S50, detector by detector based on the reference calibration sub-step at S30 and the at least one sample calibration sub-step at S40, at least one of:

a mass equivalence $MEQ_{HE}$ of the at least one a material other than the reference material to the reference material, at a higher level of radiation energy HE of the at least two levels of radiation energy, and/or

a mass equivalence $MEQ_{LE}$ of the at least one a material other than the reference material to the reference material, at a lower level of radiation energy LE of the at least two levels of radiation energy.

In some examples, determining the radiation transmission through a plurality of thicknesses of an object comprises irradiating with the radiation 13 stairs comprising steps of different thicknesses, e.g. of steel or any other material of interest, and detecting the transmitted radiation, detector by detector of the array 12. The determining may further involve representing the material thickness as a function of -log(transmission). Intermediate values (e.g. not corresponding to steps of the stairs) may be calculated e.g. by interpolation.

In some examples, determining the equivalence data may further comprise:

determining, at S60, a parameter $\Delta$ representative of a difference between the mass equivalence $MEQ_{HE}$ to the reference material and the mass equivalence $MEQ_{LE}$ to the reference material, such that:

$$\Delta = MEQ_{HE} - MEQ_{LE}.$$

In some examples, determining the equivalence data may further comprise:

determining, at S70, a graph G representing the parameter $\Delta$ as a function of at least one of:

the mass equivalence $MEQ_{HE}$ at the higher level of radiation energy; and/or

an average $\mu$ of the mass equivalence $MEQ_{HE}$ and the mass equivalence $MEQ_{LE}$, such that:

$$\mu = (MEQ_{HE} + MEQ_{LE})/2.$$

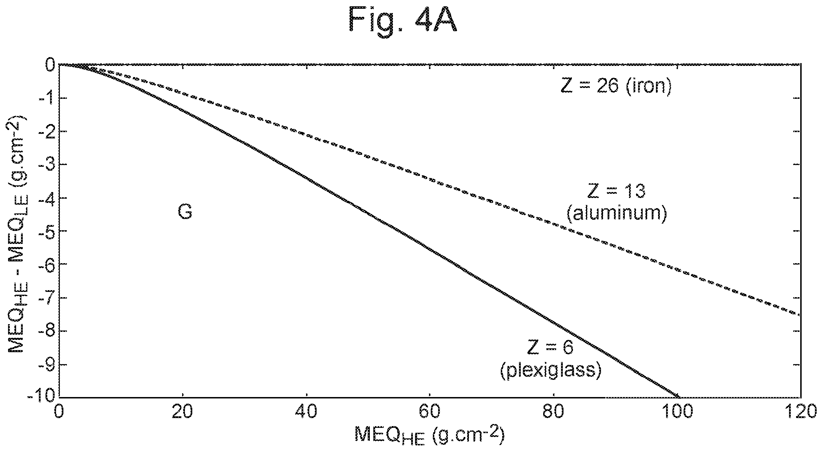

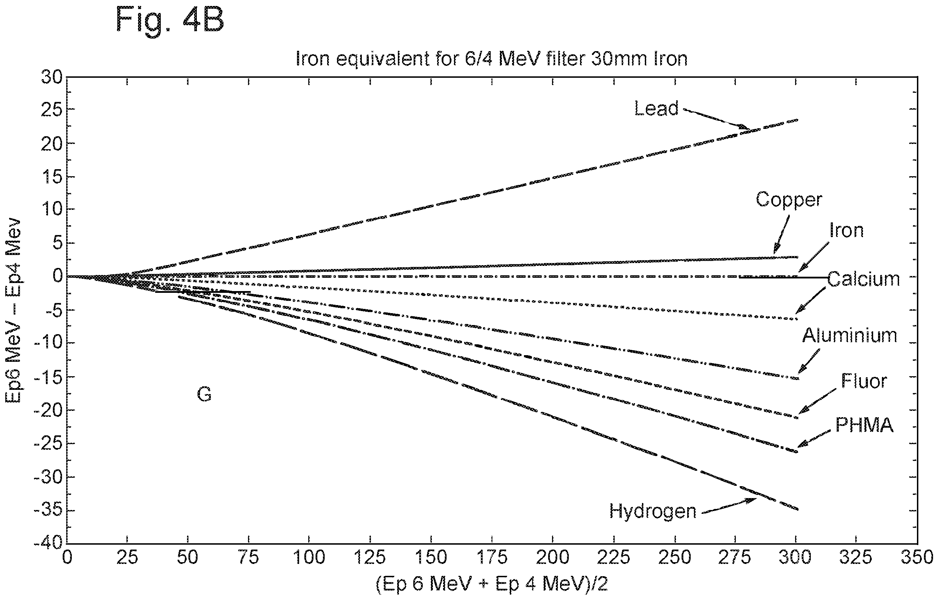

Examples of graphs G obtained during the reference calibration sub-step and/or the sample calibration sub-step are illustrated in Figures 4A and 4B.

As it is appreciated from Figures 4A and 4B, the representation of the parameter $\Delta$ with respect to the mass equivalence $MEQ_{HE}$ (Figure 4A) or the average $\mu$ (Figure 4B) is nearly linear. The linear part of the graphs will be used in methods according to the disclosure, as described further down in the present disclosure.

In Figures 4A and 4B, the reference material is steel (or iron). The horizontal line at 0 shows that steel is the reference material. For materials with an atomic number Z lower than the atomic number of steel (such as poly(methyl methacrylate) and aluminum, as non-limiting example), $\Delta$ is smaller than 0. For materials with an atomic number Z greater than the atomic number of steel (such as lead or copper as represented in Figure 4B), $\Delta$ is greater than 0.

Alternatively or additionally, obtaining the observation data, at S3, based on the image data and the equivalence data may comprise applying the obtained mass equivalence data to the reference material, to the image data.

In some examples, applying the obtained mass equivalence data to the reference material, to the image data comprises:

determining, pixel by pixel of the inspection image of the cargo, based on the obtained mass equivalence data and the image data, at least one of:

a mass equivalence $MEQ_{HE}$ of the inspection image of the cargo to the reference material, at a higher level of radiation energy HE of the at least two levels of radiation energy, and/or

a mass equivalence $MEQ_{LE}$ of the inspection image of the cargo to the reference material, at a lower level of radiation

energy LE of the at least two levels of radiation energy.

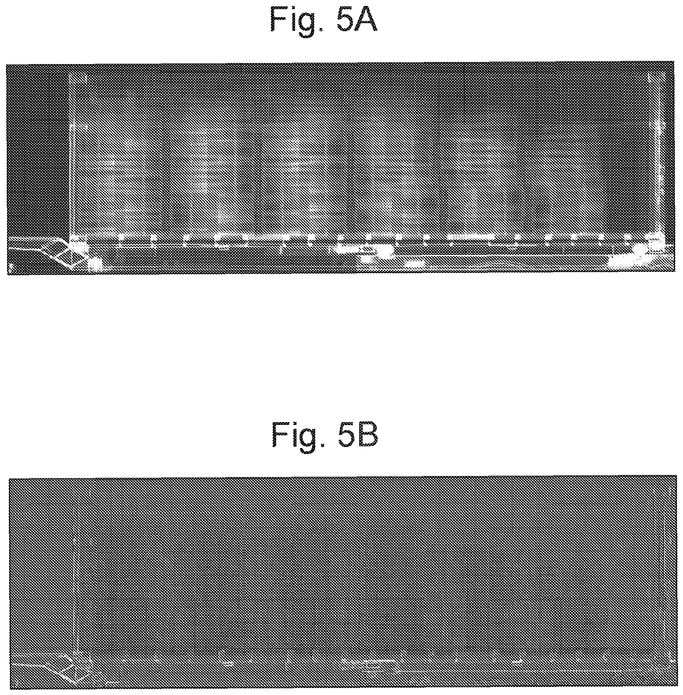

An example of an $MEQ_{HE}$ image is illustrated in Figure 5A. The $MEQ_{HE}$ image could be an interesting view for operators of the system 10, e.g. in addition to the X-ray image of the cargo.

In some examples, one of the first material or the second material may be the reference material, such that the mass equivalence is expressed with respect to the first material or the second material. In such examples, determining at S4 the at least one of the first material and the second material, based on the obtained observation data, may comprise: determining Icorr representative of a difference between the mass equivalence $MEQ_{HE}$ to the reference material of the inspection image at the higher level of radiation energy and the mass equivalence $MEQ_{LE}$ to the reference material at the lower level of radiation energy, such that:

$$Icorr = MEQ_{HE} - MEQ_{LE}.$$

An example of Icorr is illustrated in Figure 5B.

It should be understood that steel may be removed from the image of Figure 5A to the image of Figure 5B. Given that the steel MEQ for steel is the same at low energy LE and high energy HE (see e.g. Figures 4A and 4B), most of the container wall and container roof represented in Figure 5A disappear in an image of the difference $Icorr = MEQ_{HE} - MEQ_{LE}$ as shown in Figure 5B. In Figure 5B, mostly organic materials in the cargo remain visible. The image Icorr could be an interesting view for operators, e.g. in addition to the X-ray image of the cargo.

As described below, the disclosure also enables identification of materials in one or more zones of interest where the first object overlaps the second object in the inspection image of the cargo.

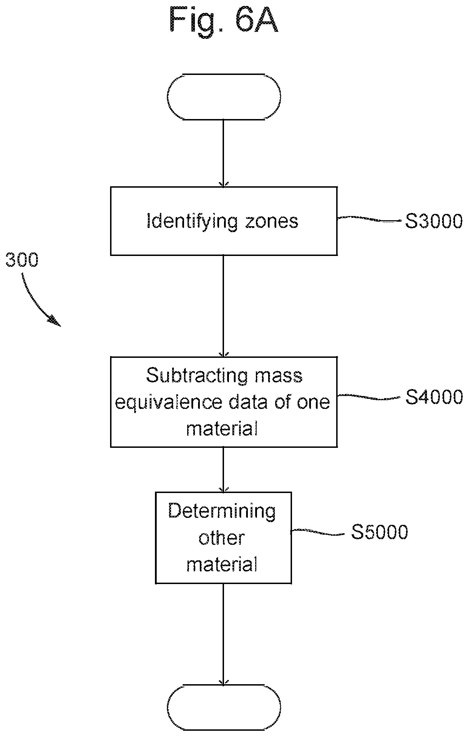

In some examples, determining at S4 the at least one of the first material and the second material, based on the obtained observation data, may comprise, as illustrated in Figure 6A with reference to method 300:

identifying, at S3000, one or more zones of interest where the first object overlaps the second object in the inspection image of the cargo, and
for at least one of the identified one or more zones of interest:

subtracting, at S4000, mass equivalence data of at least one of the first material and the second material from the obtained observation data ; and
determining, at S5000, the other one of the at least one of the first material and the second material, based on the subtracting.

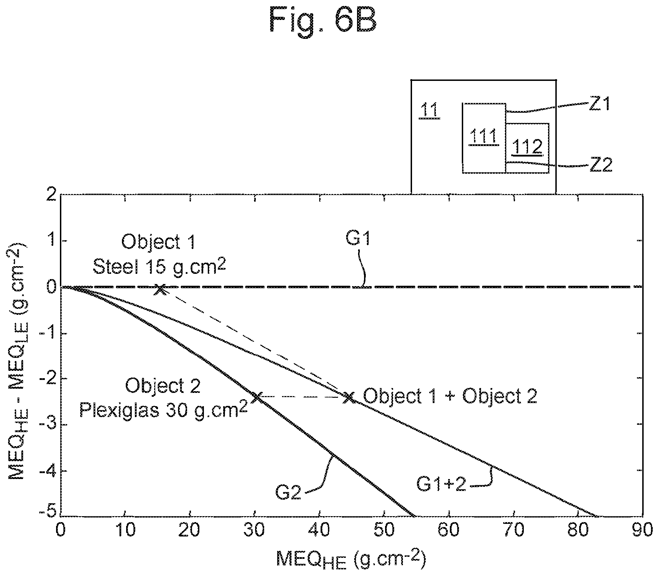

As it is appreciated from Figures 4A, 4B and 6B, the representations of the parameter $\Delta$ and/or a corresponding parameter p (described in more detail below) with respect to the mass equivalence $MEQ_{HE}$ or the average $\mu$ is nearly linear.

In some examples, subtracting at S4000 the mass equivalence data of the at least one of the first material and the second material may comprise:
subtracting the mass equivalence data of the first material, such that:

$MEQ_{HE}$ for the second material = $MEQ_{HE}$ in the identified zone - $MEQ_{HE}$ for the first material

$MEQ_{LE}$ for the second material = $MEQ_{LE}$ in the identified zone - $MEQ_{LE}$ for the first material

As illustrated in Figures 6A and 6B, in some examples, determining at S5000 the other one of the at least one of the first material and the second material, based on the subtracting at S4000 comprises:

determining the second material from a reading on the graph G (e.g. G2 in Figure 6B) representing the parameter $\Delta$, using a parameter p such that:

$$p = MEQ_{LE} \text{ for the second material} - MEQ_{HE} \text{ for the second material},$$

p being represented a function of at least one of:

the mass equivalence $MEQ_{HE}$ for the second material at the higher level of radiation energy; and/or
an average $\mu$ of the mass equivalence $MEQ_{HE}$ and the mass equivalence $MEQ_{LE}$ for the second material, such

that:

$$\mu = (MEQ_{HE} + MEQ_{LE})/2.$$

As the representative graphs of the parameter Δ (e.g. graphs G1 and G2 of Figure 6B) and/or the parameter p (e.g. graph G1+2 in Figure 6B) are nearly linear, an overlap of objects can be approximated as an addition of MEQ, as illustrated in Figure 6B. Figure 6B schematically illustrates a principle of material overlap using MEQ graphs, where the overlap (as shown on graph G1+2) of the second material of the second object Object 2 (e.g. 30g/cm$^2$ of PMMA) with the first material of the first object Object 1 (e.g. 15g/cm$^2$ of steel) may be approximated by adding, in two dimensions, 15g/cm$^2$ of steel (as shown on graph G1) to 30g/cm$^2$ of PMMA (as shown on graph G2).

As a consequence, removal of overlaps may be obtained by a subtraction. Figure 6B schematically also illustrates a principle of material subtraction using the MEQ graphs, where the second material of the second object Object 2 may be approximated (e.g. using graph G2) by subtracting, in two dimensions, 15g/cm$^2$ of steel (graph G1) to an overlap of 30g/cm$^2$ of PMMA with 15g/cm$^2$ of steel (graph G1+2).

Even though the result point (Object 2 in Figure 6B) is not exactly placed at the same position than a point corresponding to 30g/cm$^2$ of PMMA on the graph G2 corresponding to the PMMA of the brand Plexiglas (e.g. obtained during the sample calibration sub-step described above), the two points are closed enough to provide a good estimation of the second material of the second object Object 2.

As illustrated in Figures 2 and 6B, in some examples, the mass equivalence data to be subtracted from the overlapping of the first material and the second material in a zone Z2 of interest may be determined based on at least one of prior knowledge (e.g. the operator of the system 10 knows that the first material is steel) and/or knowledge extracted from a zone Z1 where the first object and/or the second object do not overlap. With reference to the example illustrated in Figures 2 and 6B, it may be determined that the first material of the first object 111 (Object 1) is steel and that the MEQ of the first object 111 (Object 1) is 15g/cm$^2$, based on knowledge (e.g. observation) extracted from the part Z1 of the image where the first object 111 (Object 1) does not overlap the second object 112 (Object 2). The 15g/cm$^2$ of steel of Object 1 may then be subtracted from the zone Z2 of interest (graph G1+2 of Figure 6B) where there is overlapping of Object 1 + Object 2, to identify Object 2 as 30g/cm$^2$ of PMMA (graph G2 of Figure 6B), using the graphs of Figure 6B as described above.

It should be understood that in the general case the subtracting of the equivalence data (e.g. the equivalence data of the first material in graph G1 of the example of Figure 6B) may be done in two dimensions, i.e. along a direction of a slope of the linear part of the graph G1 corresponding to the material to be subtracted from the overlapping in graph G1+2. The subtracting in two dimensions is due to the fact that the overlapping objects may not necessarily be made of the reference material, in the general case. In other words, in the general case the first object Object 1 may not be necessarily in steel as in the specific example of Figure 6B - the graphs of Figure 6B being expressed with steel being the material of reference. Therefore in the general case the linear part of graph G1 corresponding to Object 1 to be subtracted may not have a slope equal to 0 as in the specific example of Figure 6B.

A more detailed explanation of the principle for obtaining the graphs G of Figures 4A, 4B and 6B will now be described.

In the general case,

$$MEQ_{HE} - MEQ_{LE}. = f(Z).g(\mu)$$

Or

$$MEQ_{HE} - MEQ_{LE}. = f(Z).g(MEQ_{HE})$$

The function g may been chosen as a branch of hyperbola, with a nearly linear part:

$$g(x) = x.(ax+b)/(cx+d).$$

The parameters c and d are greater than 0, in order to avoid division by zero in our range of thicknesses. There is a degree of freedom in the values of f(Z), because it is a multiplication factor to the hyperbola, playing the same role than the ratio b/a.

With steel chosen as a reference in the examples of Figures 4A, 4B and 6B,

$$f(steel) = zero.$$

In some examples, values of f, a and b may be such that:

$$f(\text{aluminum})=\mathbf{1}.$$

The value of f(Z) mainly depends on the energy levels, and almost not on the detectors. Calibration may thus be simplified. For a change in energy spectrum on the system 10, recalibration during the calibration sub-steps may involve only the thicknesses of steel (i.e. the reference calibration sub-step) and not the whole set of steel, PMMA, aluminum and lead thicknesses (i.e. the sample calibration sub-step).

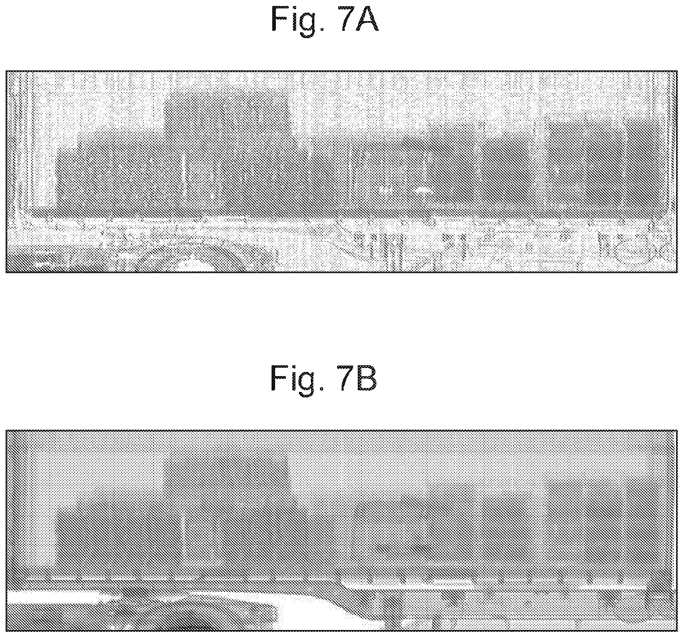

Figure 7A illustrates image $MEQ_{HE}$ - $MEQ_{LE}$ and Figure 7B illustrates image ($MEQ_{HE}$ + $MEQ_{LE}$)/2.

The ($MEQ_{HE}$ + $MEQ_{LE}$)/2 image could be an interesting view for operators, e.g. in addition to the X-ray image of the cargo, e.g. it is less noisy than the $MEQ_{HE}$ - $MEQ_{LE}$ image of Figure 7A.

In the examples illustrated in Figure 2, the inspection radiation source 15 may comprise an X-ray generator. The energy of the X-rays may be comprised between 100keV and 15MeV, and the dose rate may be comprised between 2mGy and 20Gy (Gray) per minute at one meter from the source. In the example illustrated by Figure 2, the maximum X-ray energy of the X-ray source 15 may be e.g., between 100keV and 9.0MeV, typically e.g., 2MeV, 3.5MeV, 4MeV, or 6MeV, for a steel penetration capacity e.g., between 40mm to 400mm, typically e.g., 300mm (12in). In the example illustrated by Figure 2, the dose may be e.g., between 20mGy and 120mGy. In other examples, the maximum x-ray energy of the X-ray source 15 may be e.g., between 4MeV and 10MeV, typically e.g., 9MeV, for a steel penetration capacity e.g., between 300mm to 450mm, typically e.g., 410mm (16.1in). In some examples, the dose may be 17Gy.

The system 10 may further comprise other types of detectors, such as optional gamma and/or neutrons detectors, e.g., adapted to detect the presence of radioactive gamma and/or neutrons emitting materials within the cargo 11, e.g., simultaneously to the X-ray inspection.

The disclosure of this application also contains the following numbered clauses:

1. A method for determining a material in a cargo, the cargo comprising a first object made of a first material and a second object made of a second material, the method comprising:

    obtaining image data associated with an inspection image of the cargo, for at least two levels of radiation energy;
    obtaining equivalence data associated with mass equivalence of at least one of the first material and the second material with respect to a reference material, for the at least two levels of radiation energy;
    obtaining observation data based on the image data and the equivalence data; and
    determining at least one of the first material and the second material, based on the obtained observation data.

2. The method of clause 1, wherein the mass equivalence of a given material with respect to the reference material corresponds to:
a thickness of an object made of the reference material, associated with a same radiation transmission, in the inspection image, as a radiation transmission associated with a thickness of an object made of the given material.

3. The method of clause 1 or 2, wherein, for an object made of a material other than the reference material, the mass equivalence with respect to the reference material depends on radiation energy.

4. The method of any one of clauses 1 to 3, wherein the mass equivalence is expressed in $g.cm^{-2}$.

5. The method of any one of clauses 1 to 4, wherein

    the reference material being metallic, the mass equivalence MEQ to the reference material is associated with metallic MEQ, such as iron MEQ, steel MEQ, lead MEQ or aluminium MEQ, and/or
    the reference material being organic, the mass equivalence MEQ to the reference material is associated with organic MEQ, such as poly(methyl methacrylate) MEQ.

6. The method of any one of clauses 1 to 5, wherein obtaining the equivalence data comprises at least one of:

    receiving the equivalence data from a calibration step; and/or
    determining the equivalence data during a calibration step.

7. The method of clause 6, wherein determining the equivalence data comprises:

    determining, in a reference calibration sub-step, radiation transmission through a plurality of thicknesses of a

reference object made of the reference material, for the at least two levels of radiation energy, detector by detector of an array of detectors configured to generate, at least partly, the inspection image of the cargo; and
determining, in at least one sample calibration sub-step, a radiation transmission through a plurality of thicknesses of at least one sample object made of a material other than the reference material, for the at least two levels of radiation energy, detector by detector of the array of detectors configured to generate, at least partly, the inspection image of the cargo; and
determining, detector by detector based on the reference calibration sub-step and the at least one sample calibration sub-step, at least one of:

a mass equivalence $MEQ_{HE}$ of the at least one a material other than the reference material to the reference material, at a higher level of radiation energy HE of the at least two levels of radiation energy, and/or
a mass equivalence $MEQ_{LE}$ of the at least one a material other than the reference material to the reference material, at a lower level of radiation energy LE of the at least two levels of radiation energy.

8. The method of clause 7, wherein determining the equivalence data further comprises:

determining a parameter $\Delta$ representative of a difference between the mass equivalence $MEQ_{HE}$ to the reference material and the mass equivalence $MEQ_{LE}$ to the reference material, such that:

$$\Delta = MEQ_{HE} - MEQ_{LE}$$

and
determining a graph G representing the parameter $\Delta$ as a function of at least one of:

the mass equivalence $MEQ_{HE}$ at the higher level of radiation energy; and/or
an average $\mu$ of the mass equivalence $MEQ_{HE}$ and the mass equivalence $MEQ_{LE}$, such that:

$$\mu = (MEQ_{HE} + MEQ_{LE})/2.$$

9. The method of any one of clauses 1 to 8, wherein obtaining the observation data based on the image data and the equivalence data comprises:
applying the obtained mass equivalence data to the reference material, to the image data.

10. The method of clause 9, wherein applying comprises:
determining, pixel by pixel of the inspection image of the cargo, based on the obtained mass equivalence data and the image data, at least one of:

a mass equivalence $MEQ_{HE}$ of the inspection image of the cargo to the reference material, at a higher level of radiation energy HE of the at least two levels of radiation energy, and/or
a mass equivalence $MEQ_{LE}$ of the inspection image of the cargo to the reference material, at a lower level of radiation energy LE of the at least two levels of radiation energy.

11. The method of clause 10, wherein one of the first material or the second material is the reference material, and wherein determining the at least one of the first material and the second material, based on the obtained observation data, comprises:
determining Icorr representative of a difference between the mass equivalence $MEQ_{HE}$ to the reference material of the inspection image at the higher level of radiation energy and the mass equivalence $MEQ_{LE}$ to the reference material at the lower level of radiation energy, such that:

$$Icorr = MEQ_{HE} - MEQ_{LE}.$$

12. The method of clause 10 or 11, wherein determining the at least one of the first material and the second material, based on the obtained observation data, comprises:

identifying one or more zones of interest where the first object overlaps the second object in the inspection image of the cargo, and

wherein determining the at least one of the first material and the second material, based on the obtained observation data, comprises, for at least one of the identified one or more zones of interest:
subtracting mass equivalence data of at least one of the first material and the second material from the obtained observation data ; and
determining the other one of the at least one of the first material and the second material, based on the subtracting.

13. The method of clause 12, wherein subtracting the mass equivalence data of the at least one of the first material and the second material comprises:
subtracting the mass equivalence data of the first material, such that:

$MEQ_{HE}$ for the second material = $MEQ_{HE}$ in the identified zone - $MEQ_{HE}$ for the first material

$MEQ_{LE}$ for the second material = $MEQ_{LE}$ in the identified zone - $MEQ_{LE}$ for the first material

14. The method of clause 13 when dependent on clause 8, wherein determining the other one of the at least one of the first material and the second material, based on the subtracting comprises:

determining the second material from a reading on the graph G representing the parameter $\Delta$, using a parameter p such that:

$$p = MEQ_{LE} \text{ for the second material} - MEQ_{HE} \text{ for the second material},$$

p being represented a function of at least one of:

the mass equivalence $MEQ_{HE}$ for the second material at the higher level of radiation energy; and/or
an average $\mu$ of the mass equivalence $MEQ_{HE}$ and the mass equivalence $MEQ_{LE}$ for the second material, such that:

$$\mu = (MEQ_{HE} + MEQ_{LE})/2.$$

15. The method of clause 14, wherein subtracting comprises:
subtracting the equivalence data along a direction of a slope of a linear part of a graph corresponding to the material to be subtracted from the overlapping of the first object and the second object.

16. The method of any one of clauses 12 to 15, wherein the mass equivalence data to be subtracted from the overlapping of the first material and the second material in a zone of interest is determined based on at least one of:

prior knowledge; and/or
knowledge extracted from a zone where the first object and/or the second object do not overlap.

17. Apparatus comprising:

at least a processor; and
a memory,
wherein the memory comprises instructions which, when executed by the processor, enable the processor to perform the method according to any one of clauses 1 to 16.

18. A computer program or a computer program product, comprising instructions which, when executed by a processor, enable the processor to perform a method according to any one of clauses 1 to 16 or to provide the apparatus of clause 17.

**Claims**

**1.** A method (100) for inspecting a cargo (11), the cargo comprising a first object (111) made of a first material and a

second object (112) made of a second material, the method comprising:

obtaining (S1) image data associated with an inspection image of the cargo, for at least two levels (HE, LE) of radiation energy;
obtaining (S2) equivalence data associated with mass equivalence of at least one of the first material and the second material with respect to a reference material, for the at least two levels of radiation energy;
obtaining (S3) observation data based on the image data and the equivalence data, comprising applying the obtained mass equivalence data to the image data by determining, pixel by pixel of the inspection image of the cargo, based on the obtained mass equivalence data and the image data:

a mass equivalence $MEQ_{HE}$ of the inspection image of the cargo, at a higher level of radiation energy HE of the at least two levels of radiation energy, and
a mass equivalence $MEQ_{LE}$ of the inspection image of the cargo, at a lower level of radiation energy LE of the at least two levels of radiation energy; and

determining Icorr representative of a difference between the mass equivalence $MEQ_{HE}$ of the inspection image at the higher level of radiation energy and the mass equivalence $MEQ_{LE}$ at the lower level of radiation energy, such that:

$$Icorr = MEQ_{HE} - MEQ_{LE}$$

wherein one of the first material or the second material is the reference material.

**2.** The method (100) of claim 1, wherein the mass equivalence of a given material with respect to the reference material corresponds to:
a thickness of an object made of the reference material, associated with a same radiation transmission, in the inspection image, as a radiation transmission associated with a thickness of an object made of the given material.

**3.** The method (100) of claim 1 or 2, wherein, for an object made of a material other than the reference material, the mass equivalence with respect to the reference material depends on radiation energy.

**4.** The method (100) of any one of claims 1 to 3, wherein the mass equivalence is expressed in $g.cm^{-2}$.

**5.** The method (100) of any one of claims 1 to 4, wherein

the reference material being metallic, the mass equivalence MEQ to the reference material is associated with metallic MEQ, such as iron MEQ, steel MEQ, lead MEQ or aluminium MEQ, and/or
the reference material being organic, the mass equivalence MEQ to the reference material is associated with organic MEQ, such as poly(methyl methacrylate) MEQ.

**6.** The method (100) of any one of claims 1 to 5, wherein obtaining the equivalence data comprises at least one of:

receiving the equivalence data from a calibration step; and/or
determining (200) the equivalence data during a calibration step.

**7.** The method (100) of claim 6, wherein determining (200) the equivalence data comprises:

determining (S30), in a reference calibration sub-step, radiation transmission through a plurality of thicknesses of a reference object made of the reference material, for the at least two levels of radiation energy, detector by detector of an array of detectors configured to generate, at least partly, the inspection image of the cargo; and
determining (S40), in at least one sample calibration sub-step, a radiation transmission through a plurality of thicknesses of at least one sample object made of a material other than the reference material, for the at least two levels of radiation energy, detector by detector of the array of detectors configured to generate, at least partly, the inspection image of the cargo; and
determining (S50), detector by detector based on the reference calibration sub-step and the at least one sample calibration sub-step, at least one of:

the mass equivalence $MEQ_{HE}$ of the at least one a material other than the reference material, at the higher

level of radiation energy HE of the at least two levels of radiation energy, and/or
the mass equivalence $MEQ_{LE}$ of the at least one a material other than the reference material, at the lower level of radiation energy LE of the at least two levels of radiation energy.

**8.** The method (100) of claim 7, wherein determining the equivalence data further comprises:

determining (S60) a parameter Δ representative of a difference between the mass equivalence $MEQ_{HE}$ to the reference material and the mass equivalence $MEQ_{LE}$ to the reference material, such that:

$$\Delta = MEQ_{HE} - MEQ_{LE}$$

and
determining (S70) a graph G representing the parameter Δ as a function of at least one of:

the mass equivalence $MEQ_{HE}$ at the higher level of radiation energy; and/or
an average μ of the mass equivalence $MEQ_{HE}$ and the mass equivalence $MEQ_{LE}$, such that:

$$\mu = (MEQ_{HE} + MEQ_{LE})/2.$$

**9.** The method (100) of any of claims 1 to 8, further comprising:

identifying one or more zones (S3000) of interest where the first object overlaps the second object in the inspection image of the cargo, and
determining at least one of the first material and the second material, based on the obtained observation data, for at least one of the identified one or more zones of interest, by:

subtracting (S4000) mass equivalence data of at least one of the first material and the second material from the obtained observation data; and
determining (S5000) the other one of the at least one of the first material and the second material, based on the subtracting,

**10.** The method (100) of claim 9, wherein subtracting the mass equivalence data of the at least one of the first material and the second material comprises:
subtracting the mass equivalence data of the first material, such that:

$MEQ_{HE}$ for the second material = $MEQ_{HE}$ in the identified zone - $MEQ_{HE}$ for the first material,

$MEQ_{LE}$ for the second material = $MEQ_{LE}$ in the identified zone - $MEQ_{LE}$ for the first material.

**11.** The method (100) of claim 9 or claim 10, when dependent on claim 8, wherein determining the other one of the at least one of the first material and the second material, based on the subtracting comprises:

determining the second material from a reading on the graph G representing the parameter Δ, using a parameter p such that:

$$p = MEQ_{LE} \text{ for the second material} - MEQ_{HE} \text{ for the second material},$$

p being represented a function of at least one of:

the mass equivalence $MEQ_{HE}$ for the second material at the higher level of radiation energy; and/or
an average μ of the mass equivalence $MEQ_{HE}$ and the mass equivalence $MEQ_{LE}$ for the second material, such that:

$$\mu = (MEQ_{HE} + MEQ_{LE})/2,$$

**12.** The method (100) of any of claims 9 to 11, wherein subtracting comprises:
subtracting the equivalence data along a direction of a slope of a linear part of a graph corresponding to the material to be subtracted from the overlapping of the first object and the second object.

**13.** The method (100) of any of claims 9 to 12, wherein the mass equivalence data to be subtracted from the overlapping of the first material and the second material in a zone of interest is determined based on at least one of:

prior knowledge; and/or
knowledge extracted from a zone where the first object and/or the second object do not overlap.

**14.** Apparatus (16, 17) comprising:

at least a processor; and
a memory,
wherein the memory comprises instructions which, when executed by the processor, enable the processor to perform the method (100) according to any one of claims 1 to 13.

**15.** A computer program or a computer program product, comprising instructions which, when executed by a processor, enable the processor to perform a method (100) according to any one of claims 1 to 13 or to control the apparatus of claim 14.

Fig. 1
100
Obtaining image data
S1
Obtaining equivalence data
S2
Obtaining observation data
S3
Determining material
S4

Fig. 2

10
12
13
11
12
111
112
Z1
Z2
Z
16
O
X
Y
17
15

Fig. 3

Determining reference transmission
S30
200
Determining sample transmission
S40
Determining mass equivalence
S50
Determining parameter
S60
Determining graph
S70

Fig. 4A
Z = 26 (iron)
Z = 13
(aluminum)
Z = 6
(plexiglass)
G
MEQHE (g.cm-2)
MEQHE - MEQLE (g.cm-2)
0
20
40
60
80
100
120
0
-1
-2
-3
-4
-5
-6
-7
-8
-9
-10

Fig. 4B
Iron equivalent for 6/4 MeV filter 30mm Iron
Lead
Copper
Iron
Calcium
Aluminium
Fluor
PHMA
Hydrogen
G
Ep6 MeV – Ep4 Mev
30
25
20
15
10
5
0
-5
-10
-15
-20
-25
-30
-35
-40
0
25
50
75
100
125
150
175
200
225
250
275
300
325
350
(Ep 6 MeV + Ep 4 MeV)/2

Fig. 5A

Fig. 5B

Fig. 6A
Identifying zones
S3000
300
Subtracting mass equivalence data of one material
S4000
Determining other material
S5000

Fig. 6B

11
111
112
Z1
Z2
G1
Object 1
Steel 15 g.cm2
Object 2
Plexiglas 30 g.cm2
Object 1 + Object 2
G2
G1+2
MEQHE - MEQLE (g.cm-2)
MEQHE (g.cm-2)
2
1
0
-1
-2
-3
-4
-5
0
10
20
30
40
50
60
70
80
90

Fig. 7A

Fig. 7B